# EUROPEAN PATENT APPLICATION

(11) **EP 4 484 659 A1**
(43) Date of publication of application: **01.01.2025**
(21) Application number: 24184458.8
(22) Date of filing: 25.06.2024
(51) Int. Cl.: E03C 1/20, F16L 21/03, F16L 25/14, F16L 27/12

(54) **SLIDING SLEEVE, PIPE ASSEMBLY AND WATER TRAP**

(30) Priority: 29.06.2023 SE 2350805
(71) Applicant: Oy Prevex AB, 66900 Nykarleby (FI)
(72) Inventor: STRANDVALL, Sören, 66900 Nykarleby (FI)
(74) Representative: Bergenstråhle & Partners AB

(57) **Abstract**

A sleeve for sealingly connecting a first pipe and a second pipe, wherein an inner diameter of the first pipe is equal to or larger than an outer diameter of the second pipe, the sleeve comprising: a sleeve body, having an essentially cylindrical shape, a first sealing element configured to sealingly engage an outer surface of the first pipe, the first sealing element comprising a first sealing surface, a second sealing element configured to sealingly engage an outer surface of the second pipe, the second sealing element comprising a second sealing surface, wherein the first sealing surface defines a first inner diameter of the sleeve and the second sealing surface defines a second inner diameter of the sleeve, wherein the first inner diameter is larger than the second inner diameter.

## Description

### Technical field

The present invention relates generally to a pipe sleeve and a pipe assembly. Specifically, it relates to a sleeve and pipe assembly for a plumbing installation.

### Background art

Sleeves are utilized in plumbing for connecting two pipes or other tubular elements. A sleeve may be straight, or for example provided with a bend in order to guide a liquid flow through the pipes in a certain direction. Other versions of sleeves are used for connecting pipes of different dimensions. Currently, there are several standard dimensions for pipes for plumbing, such as a diameter of 40 and 50 millimeters. This poses a problem, since when installing a new assembly, you may need different parts for different standards. For example, when the existing waste pipe has a diameter of 40 millimeters, you need a water trap with a connection corresponding to this standard, and when the existing waste pipe has a diameter of 50 millimeters, you need a water trap with a connection corresponding to that standard.

Furthermore, during pipe installations, the pipes to be connected need to be cut to the right length to adapt to the space where the pipe installations is to be installed. For example, plumbing for directing sink wastewater to a sewer is confined in a small cabinet-like area underneath the sink. However, at least one of the pipes to be utilized in the pipe installation usually comprises a sealing at an end thereof, such as a gasket. The pipe having the sealing can naturally not be cut without cutting away the sealing, and therefore adaptations to the space can only be realized by cutting the other pipe. Alternatively, one of the pipes may be threaded, for connecting a threaded sleeve, thus similarly preventing cutting of that pipe. Today, the problem is solved by making the pipe comprising the sealing/threading short (during production) and making the connecting pipe much longer to give as much freedom for cutting and adaptations as possible.

There are additional problems relating to cutting the pipes. The error margin is commonly very small, that is, the pipes have to be cut to exactly the right length to fit in the sleeve.

As such, there is a need for improved sleeves for connecting pipes, specifically for connecting pipes of different dimensions.

### Summary of invention

An object of the present invention is to overcome at least some of the problems outlined above. This object is achieved in a first aspect of the disclosure by providing a sleeve for sealingly connecting a first pipe and a second pipe, wherein an inner diameter of the first pipe is equal to or larger than an outer diameter of the second pipe, the sleeve comprising a sleeve body, having an essentially cylindrical shape, a first sealing element configured to sealingly engage an outer surface of the first pipe, the first sealing element comprising a first sealing surface, a second sealing element configured to sealingly engage an outer surface of the second pipe, the second sealing element comprising a second sealing surface, wherein the first sealing surface defines a first inner diameter of the sleeve and the second sealing surface defines a second inner diameter of the sleeve, wherein the first inner diameter is larger than the second inner diameter.

The sealing elements provide a tight fit between the sleeve and pipes inserted therein. Such pipes will overlap and extend telescopically into each other. The sleeve provides that no other fastening means other than the sealing elements is necessary. The tight fit, in combination with enabling the pipes to overlap, provide sufficient stability.

In one exemplary embodiment, the first sealing element is arranged adjacent to a first end of the sleeve, and the second sealing element is arranged adjacent to a second, opposite end of the sleeve.

In one exemplary embodiment, the sleeve is arranged to receive the first pipe at the first end, and receive the second pipe at the second end, and the first sealing element is configured to be more compressed when sealingly engaged to the first pipe compared to the second sealing element when compressed by and sealingly engaged with the second pipe, to allow the second pipe to be moved within the first pipe in a telescopic movement, wherein, when the second pipe moves within the first pipe in a telescopic movement, the position of the sleeve relative the second pipe changes and the position of the sleeve relative the first pipe is essentially unchanged.

The first sealing element provides a liquid seal as well as stability to the sleeve when the pipes are inserted therein. Once inserted, a high force would be required to shift the first pipe relative the first sealing element. The second sealing element provides a liquid seal. However, the second pipe, once inserted, can be moved without excessive force. As such a stable structure, with the possibility of a telescopic movement between the pipes, is provided.

In one exemplary embodiment, a difference between the first inner diameter of the sleeve and the outer diameter of the first pipe, is larger than a difference between the second inner diameter of the sleeve and an outer diameter of the second pipe, such that the first sealing element is more compressed when sealingly engaged with the first pipe compared to the second sealing element when compressed by and sealingly engaged with the second pipe, thus providing the less tight fit.

The first sealing element provides a liquid seal as well as stability to the sleeve when the pipes are inserted therein. Once inserted, a high force would be required to shift the first pipe relative the first sealing element. The second sealing element provides a liquid seal. However, the second pipe, once inserted, can be moved without excessive force. As such a stable structure, with the possibility of a telescopic movement between the pipes, is provided.

In one exemplary embodiment, the first sealing element comprises a first gasket arranged on an inner surface of the sleeve, the second sealing element comprises a second gasket arranged on an inner surface of the sleeve, and wherein the first gasket and second gasket are formed by a first material, and the sleeve body is formed by a second material, different from the first material.

In one exemplary embodiment, the sleeve further comprises a smooth inner surface, arranged between the first sealing element and the second sealing element, wherein the smooth inner surface defines a third inner diameter essentially equal to an outer diameter of the first pipe.

In one exemplary embodiment, the sleeve further comprises a projection on an inside thereof defining a fourth inner diameter, measured at an upper edge of the projection, being essentially equal to an outer diameter of the first pipe.

In one exemplary embodiment, the projection is arranged between the first sealing element and second sealing element, relative a lengthwise extension of the sleeve.

In one exemplary embodiment, the projection is a wall extending along a circumference of the sleeve, and wherein the fourth inner diameter is measured between two diametrically opposite points on the upper edge.

According to a second aspect of the disclosure, there is provided a pipe assembly, comprising a first pipe and a second pipe, wherein an inner diameter of the first pipe is equal to or larger than an outer diameter of the second pipe, and a sleeve according to any one of the preceding claims, wherein the sleeve is arranged to receive the first pipe at a first end thereof, and receive the second pipe at a second, opposite end thereof, to sealingly connect the first pipe and the second pipe.

In one exemplary embodiment, after the first pipe and the second pipe are connected by the sleeve, the sleeve allows the second pipe to be moved into and out of the first pipe in a telescopic movement.

In one exemplary embodiment, the first sealing element is configured to be more compressed when sealingly engaged to the first pipe, and the second sealing element is configured to be less compressed when sealingly engaged with the second pipe to allow the second pipe to be moved within the first pipe in a telescopic movement, wherein, when the second pipe moves within the first pipe in a telescopic movement, the sleeve slides relative the second pipe and the position of the sleeve relative the first pipe is essentially unchanged.

In one exemplary embodiment, a difference between the first inner diameter of the sleeve and the outer diameter of the first pipe, is larger than a difference between the second inner diameter of the sleeve and the outer diameter of the second pipe, such that the first sealing element is more compressed when sealingly engaged with the first pipe compared to the second gasket when sealingly engaged with the second pipe, thus providing a less tight fit.

In one exemplary embodiment, the sleeve comprises a projection on an inside thereof and wherein the projection, when the first pipe is inserted into the sleeve, hinders the first pipe from exiting at the second end of the sleeve.

According to a second aspect of the disclosure, there is provided a water trap system comprising a water trap, arranged to be connected to a sink in which a fluid may be discharged, the water trap comprising a first pipe being an outlet pipe for the discharged liquid, and a sleeve according to preceding embodiments, being arranged to sealingly connect the first pipe to a second pipe, being a discharge pipe for transporting away the discharged liquid.

### Brief description of drawings

The invention is now described, by way of example, with reference to the accompanying drawings, in which:
Fig. 1 displays a pipe assembly according to the disclosure,
Figs. 2a and 2b display a pipe assembly according to the disclosure,
Figs. 3a and 3b display a sleeve according to the disclosure,
Fig. 4 displays a sleeve according to the disclosure.

### Description of embodiments

In the following, a detailed description of a sleeve and a pipe assembly is provided. In the figures, like reference numerals designate identical or corresponding elements throughout the figures. It will be appreciated that these figures are for illustration only and do not in any way restrict the scope of the present disclosure.

The invention relates to a sleeve for connecting two pipes of different diameters, wherein the sleeve allows telescopic adjustment of the pipes. Specifically, one of the pipes which has a smaller diameter may move telescopically in the other pipe, which has a larger diameter.

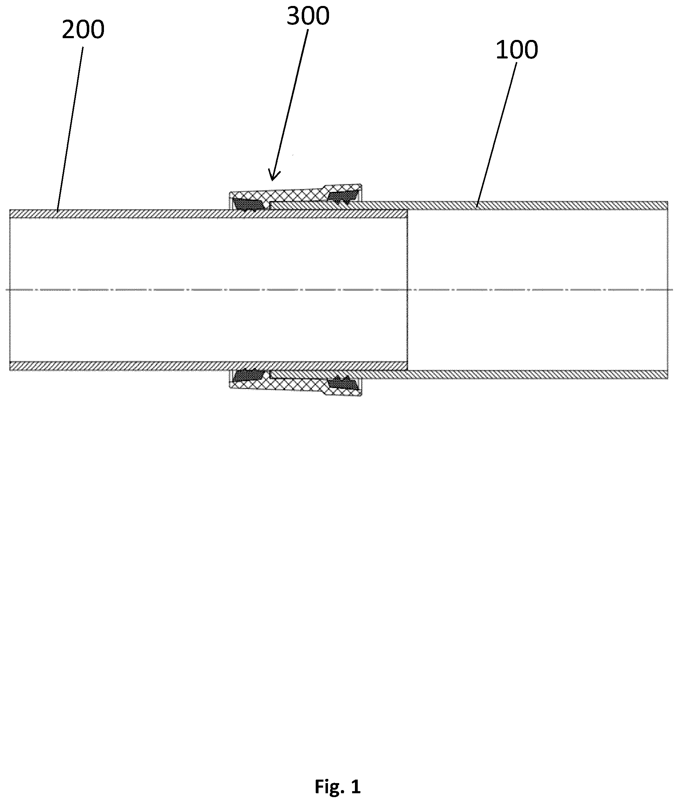

With reference to Fig. 1 there is displayed a pipe assembly according to the disclosure. The pipe assembly generally comprises a first pipe 100, a second pipe 200 and a sleeve 300 configured to sealingly connect the first pipe 100 and the second pipe 200. The sleeve 300 is provided independently from the first pipe 100 and second pipe 200, that is, the sleeve 300 is provided as a separate part.

The first pipe 100 has an inner diameter and an outer diameter. The difference between the inner diameter and the outer diameter of the first pipe 100 defines a wall thickness thereof. Correspondingly, the second pipe 200 has an inner diameter and an outer diameter. The difference between the inner diameter and the outer diameter of the second pipe 200 defines a wall thickness thereof. Furthermore, the outer diameter of the first pipe 100 is larger than the outer diameter of the second pipe 200. In one embodiment, the second pipe 200 has an outer diameter adapted such that it may move telescopically inside the first pipe 100. In one embodiment, the outer diameter of the second pipe 200 is equal to or less than the inner diameter of the first pipe 100. This provides that the second pipe 200 may be inserted, and move, inside the first pipe 100. In one embodiment, the first pipe 100 is arranged upstream of the second pipe 200 in the pipe assembly. In an alternative embodiment, the second pipe 200 is arranged upstream of the first pipe 100 in the pipe assembly. Upstream and downstream should herein be understood as relating to a direction of a flow of a liquid through the pipe assembly when arranged in a pipe installation.

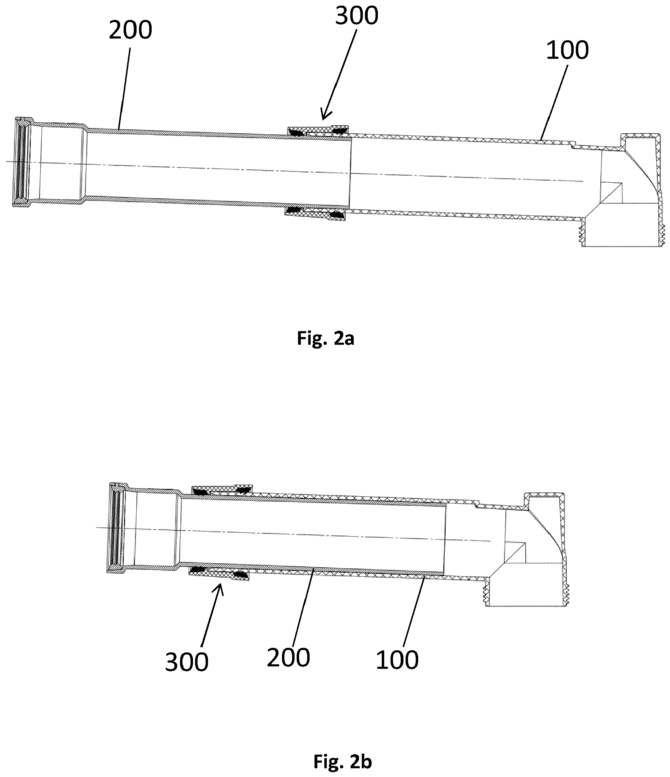

With reference to Figs. 2a and 2b there is displayed an embodiment of the pipe assembly. The pipe assembly is displayed in a first, extended state in Fig. 2a and a second, contracted state in Fig. 2b. The pipe installation is telescopically adjustable to facilitate installation with for example a kitchen sink or bathroom washstand. Since the sleeve 300 is provided independently from the first pipe 100 and second pipe 200, the first pipe 100 and/or second pipe 200 may be cut to a desired length before being connected by the sleeve 300. As such, a high degree of freedom is provided for the user during installation. Furthermore, since the pipe assembly is telescopically adjustable, the first pipe 100 and second pipe 200 do not need to be cut to an exact desired length, that is, the error margin increases. In the embodiment displayed in Figs. 2a and 2b, the second pipe 200 is an outlet pipe, for example from a water trap, and the first pipe 100 is a discharge pipe for transporting away water or other fluid discharged in a kitchen sink or washstand. In an alternative embodiment, the second pipe 200, having the smaller outer diameter, is the discharge pipe and the first pipe 100 is the outlet pipe.

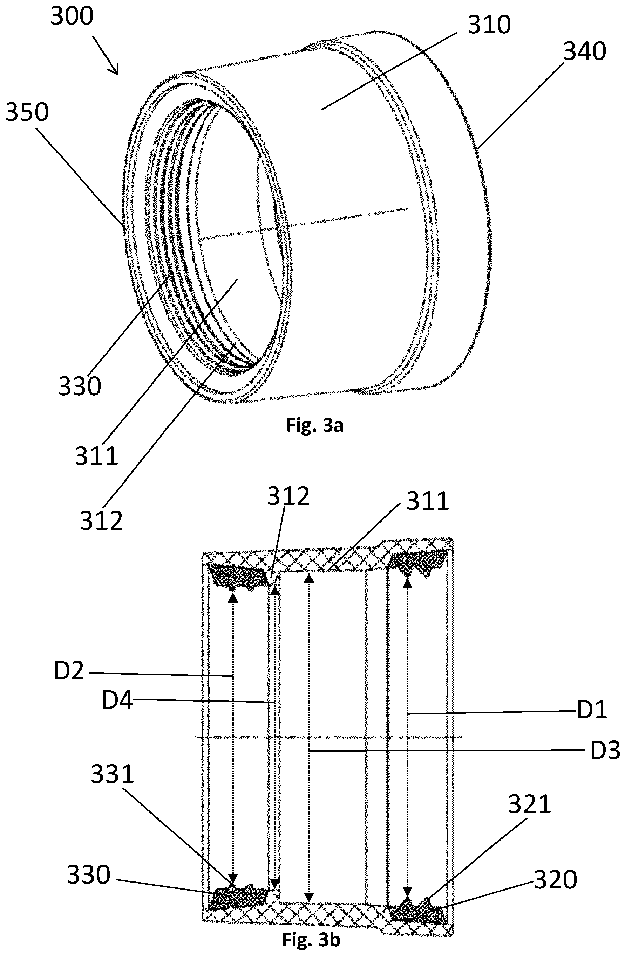

With reference to Figs. 3a and 3b, the sleeve 300 will now be described. The sleeve 300 generally comprises a sleeve body 310, a first sealing element 320 and a second sealing element 330. The first sealing element 320 and the second sealing 330 element are arranged on an inside surface of the sleeve body 310. The first sealing element 320 and the second sealing 330 element extend radially from the inside surface of the sleeve body 310. In one embodiment, the first sealing element 320 and the second sealing 330 element each extend the entire circumference of the inside surface of the sleeve body 310. In the embodiment displayed in Figs. 3a and 3b, the sleeve body 310 is made by a first material, and the first sealing element 320 and the second sealing element 330 are made by a second material. In one embodiment the first material is a thermoplastic polymer. In one embodiment the first material is polypropylene. In one embodiment, the second material is a thermoplastic elastomer. In one embodiment, the sleeve 300 is manufactured by an injection moulding process. In one embodiment, the sleeve 300 is manufactured by a 2K injection moulding process, sometimes referred to as a bi-injection moulding process.

The sleeve body 310 has a cylindrical shape. In one embodiment, the sleeve body 310 has the shape of a circular cylinder, that is, the sleeve body 310 has an essentially elliptical cross-section. In one embodiment, the sleeve body 310 has an essentially circular cross-section.

The sleeve body 310 comprises a first opening, defining a first end 340 of the sleeve 300, and a second opening, defining a second end 350 of the sleeve 300, wherein the sleeve body 310 extends between the first end 340 and the second end 350. In one embodiment, the sleeve body has a length between 20-50 mm. In one embodiment, the sleeve body has a length between 30-40 mm. In one embodiment, the sleeve body has a length between 33-34 mm. The first opening is configured to receive the first pipe 100. The second opening is configured to receive the second pipe 200.

The first sealing element 320 comprises a first sealing surface 321, configured to sealingly engage an outside of the first pipe 100 when inserted through the first opening. Thus, the first sealing element 320 provides a liquid seal between the sleeve 300 and the first pipe 100. The first sealing surface 321 defines a first inner diameter D1 of the sleeve 300, measured when the first sealing element 320 is uncompressed. Before insertion of the first pipe 100, the first inner diameter D1 is preferably smaller than the outer diameter of the first pipe 100, such that, when the first pipe 100 is inserted through the first opening, the first sealing element 320 is compressed by the first pipe 100. Thus, a sealing engagement between the first sealing element 320 and the first pipe 100 is provided. In one embodiment the first inner diameter D1 is between 30-60 mm. In one embodiment the first inner diameter D1 is between 40-50 mm. In one embodiment the first inner diameter D1 is 43-44 mm. The first sealing element 320 is provided adjacent to the first end 340 of the sleeve 300. In the embodiment displayed in Figs. 3a and 3b, the first sealing element 320 is a first gasket provided on an inner surface of the sleeve body 310. In one embodiment, the first gasket is a ring-shaped gasket. In one embodiment, the first gasket is provided in a groove in the sleeve body 310.

The second sealing element 330 comprises a second sealing surface 331, configured to sealingly engage an outside of the second pipe 200 when inserted through the second opening. Thus, the second sealing element 330 provides a liquid seal between the sleeve 300 and the second pipe 200. The second sealing surface 331 defines a second inner diameter D2 of the sleeve 300, measured when the second sealing element 330 is uncompressed. Before insertion of the second pipe 200, the second inner diameter D2 is preferably smaller than the outer diameter of the second pipe 200, such that, when the second pipe 200 is inserted through the second opening, the second sealing element 330 is compressed by the second pipe 200. Thus, a sealing engagement between the second sealing element 330 and the second pipe 200 is provided. In one embodiment the second inner diameter D2 is between 20-50 mm. In one embodiment the second inner diameter D2 is between 30-40 mm. In one embodiment the second inner diameter D2 is 38-39 mm. The second sealing element 330 is provided adjacent to the second end 350 of the sleeve 300. In the embodiment displayed in Figs. 3a and 3b, the second sealing element 330 is a second gasket provided on an inner surface of the sleeve body 310. In one embodiment, the second gasket is a ring-shaped gasket. In one embodiment, the gasket has a width between 5-10 mm. In one embodiment, the gasket has a width between 8-9 mm. In one embodiment, the second gasket is provided in a groove in the sleeve body 310.

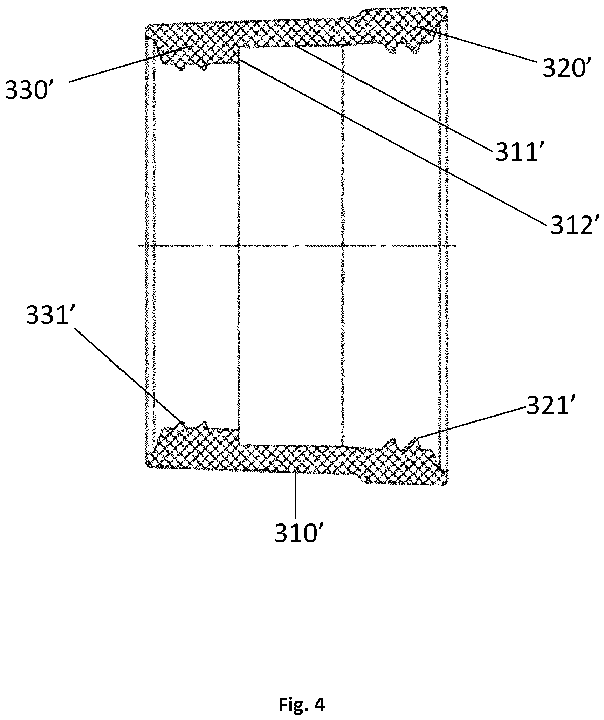

In the embodiment displayed in Figs. 3a and 3b (and in Fig. 4), the first sealing surface 321 and the second sealing surface 331 are ribbed, or wavy. In other words, the cross-section of the first sealing element 320 and the second sealing element, respectively, comprises peaks and throughs. The first sealing surface 321 and the second sealing surface 331 may comprise any number of peaks/throughs. In an alternative embodiment, the first sealing surface 321 and the second sealing surface 331 have another design, such as being smooth surfaces.

The sleeve 300 is configured such that, when the first pipe 100 is inserted through the first opening and the second pipe 200 is inserted through the second opening, a fit between the first pipe 100 and the first sealing element 320 is more tight than a fit between the second pipe 200 and the second sealing element 330. As such, movement of the first pipe 100 in relation to the sleeve 300 requires a greater force, compared to the second pipe 200 which may be moved more easily in relation to the sleeve 300. This provides that, when the first and second pipe 200 are moved in a telescopic movement, the position of the sleeve 300 in relation to the first pipe 100 is essentially unchanged and the position of the sleeve 300 in relation to the second pipe 200 changes. That is, the sleeve slides in relation to the second pipe. Thus, a telescopic movement of the second pipe 200 in the first pipe 100 is provided without endangering the liquid seal.

In one embodiment, how tight a fit between a pipe and corresponding sealing element is, is defined by a friction between a sealing element and a corresponding pipe. Specifically, the friction between the first sealing surface 321 and the first pipe 100 is higher than and a friction between the second sealing surface 331 and the second pipe.

In one embodiment, how tight a fit between a pipe and corresponding sealing element is, is defined by how much a sealing element is compressed when sealingly engaged with a corresponding pipe. As such, the pipe assembly is configured such that the first sealing element 320 is more compressed when sealingly engaged with the first pipe 100 compared to the second sealing element 330 when compressed by and sealingly engaged with the second pipe 200. In one embodiment, the compression of a sealing element is measured as a percentual thickness decrease. In one embodiment, this is provided by configuring the sleeve 300 such that a difference between the first inner diameter D1 of the sleeve 300 and the outer diameter of the first pipe 100, is larger than a difference between the second inner diameter D2 of the sleeve 300 and the outer diameter of the second pipe 200, such that the first sealing element 320 is more compressed by the first pipe 100 than the second sealing element 330 is compressed by the second pipe 200. In one embodiment, the first sealing element 320 and the second sealing element 330 have an essentially equal uncompressed height.

In the embodiment displayed in Figs. 3a and 3b, a smooth surface 311 of the sleeve body 310 extends between the first sealing element 320 and the second sealing element 330. The smooth surface 311 provides stability to the pipe assembly. The smooth surface 311 defines a third inner diameter D3 of the sleeve 300. In one embodiment the third inner diameter D3 is between 30-60 mm. In one embodiment the third inner diameter D3 is between 40-50 mm. In one embodiment the third inner diameter D3 is 44-45 mm. By adapting a length of the smooth surface 311, the sleeve 300 can be made longer or shorter. Generally, it can be said that a longer sleeve 300 increases a stability of the pipe assembly, especially when the second pipe 200 is not inserted as far into the first pipe 100. In one embodiment, the third inner diameter D3 is essentially equal to or larger than the outer diameter of the first pipe 100. In one embodiment, the smooth surface 311 is tapered, thus having a decreasing diameter measured from the first end 340 to the second end 350, and wherein the third inner diameter D3 is measured at an end of the smooth surface 311 being proximal to the second end 350 of the sleeve 300. In one embodiment, the third diameter is between 44 and 45 mm. In one embodiment, the smooth surface 311 is between 10-20 mm long. In one embodiment, the smooth surface 311 is between 14-15 mm long.

In one embodiment, the sleeve body 310 comprises a projection 312 on an inside surface thereof. In the embodiment displayed in Figs. 3a and 3b, the projection 312 is in the form of a wall extending diametrically towards a center line of the sleeve 300. The projection 312 is configured to hinder a movement of the first pipe 100 in the sleeve 300. In other words, after the first pipe 100 is inserted through the first opening, the projection 312 hinders it from exiting through the second opening. The projection 312 is furthermore configured to allow a movement of the first pipe 100 in the sleeve 300. In other words, after the second pipe 200 is inserted through the second opening, the projection 312 allows it to exit through the first opening. The projection 312 comprises an upper edge proximal to the center line of the sleeve 300, defining a highest point of the projection 312 and defining a fourth inner diameter D4 of the sleeve. In one embodiment the fourth inner diameter D4 is between 30-50 mm. In one embodiment the fourth inner diameter D4 is 35-45 mm. In one embodiment the fourth inner diameter D4 is between 40-41 mm. In the embodiment displayed in Figs. 3a and 3b, the upper edge is defined by an upper edge of the wall. In one embodiment, the fourth inner diameter D4 of the sleeve 300, measured at the upper edge, is smaller than the first outer diameter of the first pipe 100, such that movement of the first pipe 100 in the sleeve 300 is hindered by the projection 312. In one embodiment, the fourth inner diameter D4 of the sleeve 300, measured at the upper edge, is essentially equal to or larger than the second outer diameter of the second pipe 200, such that movement of the second pipe 200 in the sleeve 300 is not hindered by the projection 312.

In one embodiment, the outer diameter of the sleeve body 310 varies over a length of the sleeve body 310. In the embodiment displayed in Figs. 3a and 3b, the sleeve body 310 has a stepwise decreasing outer diameter from the first end 340 to the second end 350. In an alternative embodiment, the sleeve body 310 has a smooth other surface, that is, an essentially constant outer diameter along a length of the sleeve body 310.

With reference to Fig. 4, there is provided an alternative embodiment of the sleeve 300' according to the disclosure. The sleeve 300' displayed in Fig. 4 is formed in one piece and comprises only one material. In one embodiment, the material is a thermoplastic elastomer. In this embodiment, the first sealing element 320' and second sealing element 330' are integrated with the sleeve body 310'. Furthermore, in the embodiment displayed in Fig. 4, the second sealing element 330' is integrated with the projection 312'. This may be understood as the second sealing element 330' being configured to hinder a movement of the first pipe 100 in the sleeve 300'. In other respects, the embodiment in Fig. 4 may comprise corresponding features and properties to embodiments disclosed above with reference to Fig. 1, Figs. 2a and 2b, and Figs. 3a and 3b.

Preferred embodiments of a sleeve and a pipe assembly have been disclosed above. However, a person skilled in the art realizes that this can be varied within the scope of the appended claims without departing from the inventive idea. All the described alternative embodiments above or parts of an embodiment can be freely combined or employed separately from each other without departing from the inventive idea as long as the combination is not contradictory.

## Claims

1. A sleeve (300; 300') for sealingly connecting a first pipe (100) and a second pipe (200), wherein an inner diameter of the first pipe (100) is equal to or larger than an outer diameter of the second pipe (200), the sleeve (300; 300') comprising:
a sleeve body (310; 310'), having an essentially cylindrical shape,
a first sealing element (320; 320') configured to sealingly engage an outer surface of the first pipe (100), the first sealing element (320; 320') comprising a first sealing surface (321; 321'),
a second sealing element (330; 330') configured to sealingly engage an outer surface of the second pipe (200), the second sealing element (330; 330') comprising a second sealing surface (331; 331'),
wherein the first sealing surface (321; 321') defines a first inner diameter (D1) of the sleeve (300; 300') and the second sealing surface (331; 331') defines a second inner diameter (D2) of the sleeve (300; 300'), wherein the first inner diameter (D1) is larger than the second inner diameter (D2).

2. The sleeve (300; 300') according to claim 1, wherein the first sealing element (320; 320') is arranged adjacent to a first end (340) of the sleeve (300; 300'), and the second sealing element (330; 330') is arranged adjacent to a second, opposite end (350) of the sleeve (300; 300').

3. The sleeve (300; 300') according to claim 2, wherein
the sleeve (300; 300') is arranged to receive the first pipe (100) at the first end (340), and receive the second pipe (200) at the second end (350), and
the first sealing element (320; 320') is configured to be more compressed when sealingly engaged to the first pipe (100) compared to the second sealing element (330; 330') when compressed by and sealingly engaged with the second pipe (200), to allow the second pipe (200) to be moved within the first pipe (100) in a telescopic movement,
wherein, when the second pipe (200) moves within the first pipe (100) in a telescopic movement, the position of the sleeve (300; 300') relative the second pipe (200) changes and the position of the sleeve (300; 300') relative the first pipe (100) is essentially unchanged.

4. The sleeve (300; 300') according to claim 3, wherein a difference between the first inner diameter (D1) of the sleeve (300; 300') and the outer diameter of the first pipe (100), is larger than a difference between the second inner diameter (D2) of the sleeve (300; 300') and an outer diameter of the second pipe (200), such that the first sealing element (320; 320') is more compressed when sealingly engaged with the first pipe (100) compared to the second sealing element (330; 330') when compressed by and sealingly engaged with the second pipe (200), thus providing the less tight fit.

5. The sleeve (300; 300') according to any one of the preceding claims, wherein:
the first sealing element (320; 320') comprises a first gasket arranged on an inner surface of the sleeve (300; 300'),
the second sealing element (330; 330') comprises a second gasket arranged on an inner surface of the sleeve (300; 300'), and
wherein the first gasket and second gasket are formed by a first material, and the sleeve body (310; 310') is formed by a second material, different from the first material.

6. The sleeve (300; 300') according to claim 5, further comprising a smooth inner surface (311; 311'), arranged between the first sealing element (320; 320') and the second sealing element (330; 330'), wherein the smooth inner surface (311; 311') defines a third inner diameter (D3) essentially equal to an outer diameter of the first pipe (100).

7. The sleeve (300; 300') according to any one of the preceding claims, the sleeve body (310; 310') further comprising a projection (312; 312') on an inside thereof defining a fourth inner diameter (D4), measured at an upper edge of the projection (312; 312'), being essentially equal to an outer diameter of the first pipe (100).

8. The sleeve (300; 300') according to claim 7, wherein the projection (312; 312') is arranged between the first sealing element (320; 320') and second sealing element (330; 330'), relative a lengthwise extension of the sleeve (300; 300').

9. The sleeve (300; 300') according to claim 7 or 8, wherein the projection (312; 312') is a wall extending along a circumference of the sleeve (300; 300'), and wherein the fourth inner diameter (D4) is measured between two diametrically opposite points on the upper edge.

10. A pipe assembly, comprising:
a first pipe (100) and a second pipe (200),
wherein an inner diameter of the first pipe (100) is equal to or larger than an outer diameter of the second pipe (200), and
a sleeve (300; 300') according to any one of the preceding claims,
wherein the sleeve (300; 300') is arranged to receive the first pipe (100) at a first end (340) thereof, and receive the second pipe (200) at a second, opposite end (350) thereof, to sealingly connect the first pipe (100) and the second pipe (200).

11. The pipe assembly according to claim 10, wherein, after the first pipe (100) and the second pipe (200) are connected by the sleeve (300; 300'), the sleeve (300; 300') allows the second pipe (200) to be moved into and out of the first pipe (100) in a telescopic movement.

12. The pipe assembly according to any one of claims 10-11, wherein the first sealing element (320; 320') is configured to be more compressed when sealingly engaged to the first pipe (100), and the second sealing element (330; 330') is configured to be less compressed when sealingly engaged with the second pipe (200) to allow the second pipe (200) to be moved within the first pipe (100) in a telescopic movement,
wherein, when the second pipe (200) moves within the first pipe (100) in a telescopic movement, the sleeve (300; 300') slides relative the second pipe (200) and the position of the sleeve (300; 300') relative the first pipe (100) is essentially unchanged.

13. The pipe assembly (300; 300') according to claim 12, wherein a difference between the first inner diameter (D1) of the sleeve (300; 300') and the outer diameter of the first pipe (100), is larger than a difference between the second inner diameter (D2) of the sleeve (300; 300') and the outer diameter of the second pipe (200), such that the first sealing element (320; 320') is more compressed when sealingly engaged with the first pipe (100) compared to the second gasket when sealingly engaged with the second pipe (200), thus providing a less tight fit.

14. The pipe assembly according to any one of claims 10-13, wherein the sleeve (300; 300') comprises a projection (312; 312') on an inside thereof and wherein the projection (312; 312'), when the first pipe (100) is inserted into the sleeve (300; 300'), hinders the first pipe (100) from exiting at the second end (350) of the sleeve (300; 300').

15. A water trap system comprising
a water trap, arranged to be connected to a sink in which a fluid may be discharged, the water trap comprising a first pipe (100) being an outlet pipe for the discharged liquid, and
a sleeve (300; 300') according to any one of the preceding claims 1-9, being arranged to sealingly connect the first pipe (100) to a second pipe (200), being a discharge pipe for transporting away the discharged liquid.
